# EUROPÄISCHE PATENTSCHRIFT

(11) **EP 1 061 145 B1**
(45) Veröffentlichungstag und Bekanntmachung des Hinweises auf die Patenterteilung: **29.10.2003**
(21) Anmeldenummer: 00111134.3
(22) Anmeldetag: 24.05.2000
(51) Int. Cl.: C22B 11/00, C01G 55/00, C22B 3/24, C22B 3/44

(54) **Verfahren zur Herstellung hochreinen Platins aus einer Hexahalogenplatinat-Lösung**
Process of producing high purity platinum from a hexachloroplatinate solution
Procédé de préparation du platinum métallique pur à partir d'une solution d'hexachloroplatinate

(30) Priorität: 18.06.1999 DE 19928027
(43) Veröffentlichungstag der Anmeldung: 20.12.2000
(73) Patentinhaber: W.C. Heraeus GmbH & Co. KG, 63450 Hanau (DE)
(72) Erfinder: Stettner, Martin, 63674 Altenstadt (DE); Meyer, Horst, Dr., 63674 Altenstadt (DE); Grehl, Matthias, Dr., 60388 Frankfurt (DE)
(74) Vertreter: Kühn, Hans-Christian

(56) Entgegenhaltungen:
- DD-A- 147 688
- DD-A- 299 876
- DATABASE WPI Section Ch, Week 199523 Derwent Publications Ltd., London, GB; Class E31, AN 1995-175241 XP002147982 & JP 07 097221 A (TANAKA KIKINZOKU KOGYO KK), 11. April 1995 (1995-04-11)
- DATABASE WPI Section Ch, Derwent Publications Ltd., London, GB; Class E31, AN 1973-19113U XP002147983 & SU 262 888 A (NS KURNAKOV GENERAL AND I)
- PATENT ABSTRACTS OF JAPAN vol. 012, no. 270 (C-515), 27. Juli 1988 (1988-07-27) & JP 63 049253 A (FUJI ELECTRIC CO LTD), 2. März 1988 (1988-03-02)
- PATENT ABSTRACTS OF JAPAN vol. 005, no. 041 (C-047), 18. März 1981 (1981-03-18) & JP 55 164042 A (AGENCY OF IND SCIENCE & TECHNOL), 20. Dezember 1980 (1980-12-20)
- GINZBURG S.I.: 'INTERACTION OF PLATINUM HYDROXO COMPLEXES WITH SULFURIC AND ORTHOPHOSPHORIC ACIDS' ZH. NEORG. KHIM. Bd. 20, Nr. 5, 1975, MOSCOW, Seiten 1347 - 1351

## Beschreibung

Die Erfindung betrifft ein Verfahren zur Herstellung von Platin.

Es ist seit langem bekannt, Platin durch Reduktion einer wäßrigen Lösung eines Kaliumhexachloroplatinatsalzes herzustellen. Nachteilig bei diesem Verfahren ist die Tatsache, daß der erhaltende Platinschlamm in mehreren Waschgängen kaliumionenfrei gewaschen werden muß, was sich zum einen nachteilig im hohen Verbrauch des Waschwassers und zum anderen in der sich dadurch verschlechternden Qualität des Schwamms äußert.

Die Patentschrift DD-A-299876 offenbart die Gewinnung von Platinmetallverbindungen aus salpetersauren, elektrolytischen Lösungen der Silberelektrolyse durch Ionenaustausch mit Iminodiessigsäure-Gruppen enthaltenden Ionenaustauschersäulen.

Die Druckschrift JP-A-07097221 beschreibt die Erzeugung von Hexahydroxoplatinsäure durch Neutralisation von Na₂Pt(OH)₆ mittels einer Ionenaustauschmembran.

Aus dem vorgenannten ergibt sich das Problem, mit Hilfe eines neuartigen Verfahrens die oben genannten Nachteile zumindest teilweise zu beseitigen. Das sich ergebende Problem liegt insbesondere darin, den hohen Waschwasserverbrauch auf ein Minimum zu reduzieren und somit gleichzeitig die Qualität des Platinschwamms zu erhöhen.

Dieses Problem wird erfindungsgemäß durch ein Verfahren nach Anspruch 1 gelöst.

Kern der vorliegenden Erfindung ist die Tatsache, daß vor dem eigentlichen Reduktionsschritt eine wäßrige Hexahalogenoplatinatlösung über einen Kationenaustauscher gegeben wird, wobei die vorhandenen Kationen beispielsweise Kaliumionen gegen H⁺ ausgetauscht werden. Weiterhin werden durch den lonenaustauschprozeß und die nachfolgende Reduktion zum Platin-Metall möglicherweise geringfügig vorhandene Verunreinigungen entfernt. Auf diese elegante Art und Weise erhält man eine reine metallionenfreie wäßrige Hexahalogenoplatinsäurelösung, die anschließend mittels eines Reduktionsmittels bei einer Temperatur von T +30° C und einem pH-Wert von 0 bis 4 zur Ausfällung reduziert wird, so daß der resultierende Platinschwamm als solcher nicht metallionenfrei gewaschen werden muß.

Weiterhin ist es von Vorteil, wenn der erhaltene Platinschwamm gewaschen, getrocknet und geglüht wird, da auf diese Art und Weise letzte Verunreinigungen entfernt werden.

Darüberhinaus ist es von Vorteil, wenn die Lösung nach dem Kationenaustauscherdurchlauf eingedampft wird, da das erhaltene Platin kompakter anfällt, sich besser filtrieren läßt und pro kg erzeugtem Platin-Schwamm weniger Waschwasser anfällt.

Schließlich erweist es sich von Vorteil, daß als Reduktionsmittel Hydrazin, Ascorbinsäure, Ameisensäure oder Oxalsäure verwendet wird, da sich diese Substanzen in der Praxis bewährt haben. Denkbar sind jedoch auch andere Reduktionsmittel wie beispielsweise Wasserstoff (unter Druck), Zucker und Formaldehyd.

In vorteilhafter Weise wird als Hexahalogenoplatinat-Lösung eine Kaliumhexahalogenoplatinat-Lösung verwendet, da dieses Platinat in vorhergehenden Verfahrensschritten einfach isoliert werden kann.

Darüberhinaus ist eine Hexachloroplatinat-Lösung von Vorteil, da bekannte Scheideverfahren oft in salzsaurem Medium durchgeführt werden und das Hexachloroplatinat in diesem Medium die stabile Spezies ist.

Schließlich wird in vorteilhafter Weise die Reduktion zu Platin bei einer Temperatur von +65° C bis +95° C durchgeführt, um feinverteiltes Platinpulver zu erhalten und Verspiegelungen bzw. massive Abscheidungen von Platin zu vermeiden.

Die nachfolgenden Beispiele dienen zur Erläuterung der Erfindung.

### a) Herstellung der H₂PtCl₆-Lösung aus festem K₂PtCl₆

### Verwendete Apparatur

Die verwendete Apparatur bestand aus einem 5 I Becherglas, Rührmotor, Glasrührer, Stabthermometer, PVDF-Abdeckung, Gasbrenner, Dreifuß und Ceranplatte zum Lösen des K₂PtCl₆; Schlauchpumpe mit Ansaugrohr aus Glas, Schlauchmaterial, Doppelmantelionenaustauschersäule mit PTFE-Stempel (gefüllt mit 247 cm³ Austauscher), Ablaufschlauch mit Glasrohr, 5 I Becherglas für Raffinat, Uhrglas sowie einem Thermostaten zur Beheizung der Austauschersäule.

### Durchführung

Eine Einwaage von 74,74 g K₂PtCl₆ (entspricht ca. 30 g Pt) wurden in 3,5 l vollentsalztes Wasser unter Rühren und Heizen auf 75 °C im 5 I Becherglas gelöst (pH = 2,44 bei 71 °C). Anschließend wurde die klare Lösung bei dieser Temperatur in 2 Stunden mit Hilfe der Schlauchpumpe über den lonenaustauscher geleitet. Nachfolgend wurde der Austauscher mit 400 ml vollentsalztem Wasser nachgespült. Es wurden ca. 3,7 l H₂PtCl₆-Lösung inkl. Waschwasser erhalten.

### Technische Daten Ionenaustauschersäule

| | |
|---|---|
| Innendurchmesser, Säule | 3,0 cm |
| Höhe, Austauscherbett | 35 cm |
| Fläche, Austauscher | 7,07 cm² |
| Durchflußgeschwindigkeit | 5 ml/cm². min |
| Durchsatz | 2 l/h |
| Säulentemperatur (Thermostat) | +75 °C |

### b) Reduktion mit Hydrazinhydrat (Lewoxin 15)

### Verwendete Apparatur

Die verwendete Apparatur bestand aus einem 5 l Becherglas, Rührmotor, Glasrührer, Stabthermometer, PVDF-Abdeckung, Gasbrenner, Dreifuß, Ceranplatte und pH- und Redox-Einstabmeßkette (Pt//Ag/AgCl).

### Versuchsdurchführung

Die mittels lonenaustauscher hergestellten 3,7 l H₂PtCl₆-Lösung (pH = 1,19, T = +21 °C, ca. 30,0 g Pt abs. entsprechend 153,8 mmol) wurden in dem Becherglas vorgelegt und innerhalb von 45 Minuten auf 75 °C aufgeheizt. Anschließend wurden in einer Zeit von 10 Minuten 50 ml Lewoxin (234 mmol) portionsweise zugegeben. Die Temperatur war nach der Zugabe auf 77 °C angestiegen und die Reaktion beendet. Während der Lewoxin-Zugabe schäumte das Reaktionsgemisch zeitweise lebhaft auf. Die anfangs gelbe Lösung verfärbte sich nach farblos und wurde klar während sich das ausreduzierte Platin am Boden des Becherglases absetzte. Das Redoxpotential war nach der Lewoxin-Zugabe von einem Anfangswert von 686 mV vs Pt//Ag/AgCl auf - 58 mV vs. Pt//Ag/AgCl abgesunken. Der pH-Wert änderte sich von dem StartpH-Wert von 1,19 auf einen Endwert von pH = 0,85.

Im Anschluß wurde der Lewoxin-Überschuß über einen Zeitraum von 2 Stunden verkocht, wobei sich der Pt-Schwamm kompaktierte und am Becherglasboden ansammelte.

Die abgekühlte Suspension wurde über einen Blaubandfilter abgenutscht, dreimal portionsweise mit je 500 ml vollentsalztem Wasser gewaschen und das Pt-Pulver bei 130 °C im Trockenschrank getrocknet. Es wurden 30,163 g graues Pt-Pulver enthalten. Verspiegelungen waren nicht und massive Platinabscheidungen nur in geringem Maße an den rauhen Stellen der Apparatur zu beobachten. Die Mutterlauge (3,6 l) wurde spektroskopisch analysiert. Die Platinkonzentration in der Mutterlauge betrug nach der Reduktion laut DCP-Analyse 2 mg/l, so daß sich bei 3,6 I Volumen ein Absolutaustrag von 7,2 mg entsprechend < 0,024 % vom Ausgang ergibt.

Bei Reinheitsanalyse des erhaltenden Platin-Pulvers waren die mit Röntgenfluoreszenz (GDL) erfaßbaren Verunreinigungen bezogen auf Platin alle unterhalb der Nachweisgrenze der Analysenmethode.

Weiterhin wurden analysiert: Na (< 5 ppm bez. Pt), K (5 ppm bez. Pt) und Cl⁻ (2100 ppm bez. Pt). Da das Chlorid als HCI-Verunreinigung vorliegt, wird dieses durch Glühen bzw. Schmelzen weiter unterhalb der Spezifikationsgrenze reduziert.

## Patentansprüche

1. Verfahren zur Herstellung von Platin, wobei zunächst eine wäßrige Hexahalogenoplatinat-Lösung über einen Kationenaustauscher gegeben und anschließend die erhaltene Lösung bei einer Temperatur T > +30°C und einem pH-Wert von 0 bis 4 mittels eines Reduktionsmittels zur Ausfällung in Form eines Platinschwamms reduziert wird.

2. Verfahren nach Anspruch 1, **dadurch gekennzeichnet, daß** der erhaltene Platinschwamm gewaschen, getrocknet und geglüht wird.

3. Verfahren nach einem der Ansprüche 1 bis 2, **dadurch gekennzeichnet, daß** die Lösung nach dem Kationenaustauscherdurchlauf eingedampft wird.

4. Verfahren nach einem der Ansprüche 1 bis 3, **dadurch gekennzeichnet, daß** als Reduktionsmittel Hydrazin, Ascorbinsäure, Ameisensäure oder Oxalsäure verwendet wird.

5. Verfahren nach einem der Ansprüche 1 bis 4, **dadurch gekennzeichnet, daß** als Hexahalogenoplatinat-Lösung eine Kaliumhexahalogenoplatinat-Lösung verwendet wird.

6. Verfahren nach einem der Ansprüche 1 bis 5, **dadurch gekennzeichnet, daß** als Hexahalogenoplatinat-Lösung eine Hexachloroplatinat-Lösung verwendet wird.

7. Verfahren nach einem der Ansprüche 1 bis 6, **dadurch gekennzeichnet, daß** die Reduktion zu Platin bei einer Temperatur von +65°C bis +95°C durchgeführt wird.

## Claims

1. Process for the preparation of platinum, first an aqueous hexahaloplatinate solution being passed over a cation exchanger and the solution obtained then being reduced at a temperature T > +30°C and a pH of 0 to 4 by means of a reducing agent for precipitation in the form of a platinum sponge.

2. Process according to Claim 1, **characterized in that** the platinum sponge obtained is washed, dried and ignited.

3. Process according to either of Claims 1 and 2, **characterized in that** the solution is concentrated after passing through the cation exchanger.

4. Process according to any of Claims 1 to 3, **characterized in that** the reducing agent used is hydrazine, ascorbic acid, formic acid or oxalic-acid.

5. Process according to any of Claims 1 to 4, **characterized in that** the hexahaloplatinate solution used is a potassium hexahaloplatinate solution.

6. Process according to any of Claims 1 to 5, **characterized in that** the hexahaloplatinate solution used is a hexachloroplatinate solution.

7. Process according to any of Claims 1 to 6, **characterized in that** the reduction to platinum is carried out at a temperature of +65°C to +95°C.

## Revendications

1. Procédé de production du platine, où tout d'abord, une solution aqueuse d'hexahalogénoplatinate est appliquée à un échangeur de cations puis la solution obtenue est réduite à une température T > +30°C et à un pH de 0 à 4 au moyen d'un réducteur pour la précipitation sous forme d'une mousse de platine.

2. Procédé selon la revendication 1, **caractérisé en ce que** la mousse de platine obtenue est lavée, séchée et calcinée.

3. Procédé selon l'une des revendications 1 à 2, **caractérisé en ce que** la solution est évaporée après la traversée de l'échangeur de cations.

4. Procédé selon l'une des revendications 1 à 3, **caractérisé en ce que** l'hydrazine, l'acide ascorbique, l'acide formique ou l'acide oxalique est utilisé comme réducteur.

5. Procédé selon l'une des revendications 1 à 4, **caractérisé en ce qu'**une solution d'hexahalogénoplatinate de potassium est utilisée comme solution d'hexahalogénoplatinate.

6. Procédé selon l'une des revendications 1 à 5, **caractérisé en ce qu'**une solution d'hexachloroplatinate est utilisée comme solution d'hexahalogénoplatinate.

7. Procédé selon l'une des revendications 1 à 6, **caractérisé en ce que** la réduction en platine est réalisée à une température de +65°C à +95°C.
